# EUROPÄISCHE PATENTSCHRIFT

(11) **EP 1 921 029 B1**
(45) Veröffentlichungstag und Bekanntmachung des Hinweises auf die Patenterteilung: **03.08.2011**
(21) Anmeldenummer: 07021880.5
(22) Anmeldetag: 12.11.2007
(51) Int. Cl.: B65G 47/90, B65G 47/91

(54) **Vorrichtung zum Palettieren und Depalettieren von Waren mit einem Palettiergreifer**
Device for loading and unloading pallets with a gripper
Appareil de chargement et de déchargement de palettes avec une unité de préhension

(30) Priorität: 13.11.2006 DE 102006053694
(43) Veröffentlichungstag der Anmeldung: 14.05.2008
(73) Patentinhaber: Müller, Hermann, 88279 Amtzell (DE)
(72) Erfinder: Müller, Hermann, 88279 Amtzell (DE)
(74) Vertreter: Riebling, Peter

(56) Entgegenhaltungen:
- BE-A- 712 941
- JP-A- 2003 081 426
- NL-C2- 1 027 152
- US-A- 3 436 115
- US-A1- 2006 242 785

## Beschreibung

Gegenstand der Erfindung ist eine Vorrichtung zum Palettieren und Depalettieren von Waren, die auf einer Palette angeordnet sind mit einem Palettiergreifer nach dem Oberbegriff des Patentanspruchs 1, wie zum Beispiel aus NL-C2-102 7 152 bekannt ist.

Die Erfindung betrifft eine Vorrichtung der eingangs genannten Art, mit der beliebige Waren, die auf Paletten gestapelt sind - gestapelt, entstapelt und umorganisiert werden können. Solche Waren sind insbesondere auch Kartons, Kisten, Dosen, Container und dergleichen mehr.

Ebenso betrifft die vorliegende Erfindung einen Palettiergreifer, der nicht unbedingt Waren stapeln und entstapeln muss, die auf einer Palette angeordnet sind, sondern derartige Waren können auch auf Förderbändern, auf einer Aufstellfläche und dergleichen angeordnet sein.

Wichtig ist, dass eine Vielzahl von Waren in Form eines Gebindes lose aneinander angefügt sind und mit Hilfe eines, das gesamte Warenpaket umgreifenden, Palettiergreifers als Einheit erfasst und von einer Aufstellfläche abgehoben und auf eine andere Fläche aufgestellt werden können.

Deshalb ist - wie ausgeführt - nicht lösungsnotwendig, diese Waren auf einer Palette anzuordnen.

Mit dem Gegenstand der DE 695 13 984 T2 ist eine Anordnung mit einem Palettiergreifer bekannt geworden, bei dem die Klemmung des Warenpaketes mit Hilfe von seitlich an einer Greiferbasis schwenkbar angeordneten Klemmgreifern erfolgt.

Diese Klemmgreifer sind in gegenseitigem Abstand voneinander angeordnet und derart um eine horizontale Achse schwenkbar, dass bei einer entsprechenden Beaufschlagung der Schwenkbewegung sich die freien, schwenkbaren Enden an den Außenseiten des zu ergreifenden Warenpakets anlegen und die Waren somit zusammenklemmen.

Ein wesentlicher Nachteil dieser bekannten Anordnung ist jedoch, dass die zu klemmenden Waren nur an gegenüberliegenden Seiten geklemmt werden können und dass eine um 90° versetzte Klemmung nicht möglich ist. Sie können also nur an einander gegenüberliegenden Seiten eingeklemmt werden; in der um 90° versetzten Lage ist jedoch eine Klemmung nicht vorgesehen. Weiterer Nachteil ist, dass solche entgegengesetzt arbeitenden Schwenkgreifer außerordentlich schwer sind und das Gewicht insgesamt des Palettiergreifers sehr stark aufgrund der verwendeten Schwenkmechanik und der hierfür erforderlichen Antriebe vergrößert. Dies ist unerwünscht, denn ein solcher Palettiergreifer kann beispielsweise an einem Mehrachs-Roboter angeordnet sein, und es spielt eine entscheidende Rolle, ob das vom Roboter bewegte Gewicht des Palettiergreifers niedrig oder hoch ist. Dementsprechend können die Schwenkbewegungen des Palettiergreifers wesentlich schneller ausgeführt werden, wenn ein gewichtsreduzierter Palettiergreifer verwendet wird.

Bekannte Palettiergreifer nach dem genannten Stand der Technik wiegen jedoch bis zu 250 kg.

Statt der bekannten Schwenkgreifer ist es auch möglich, linear verfahrbare Greifer zu verwenden. Hierzu sind wiederum an zwei gegenüberliegenden Seiten horizontal angeordnet Antriebe vorgesehen, und über einen Verschiebeantrieb wird der jeweilige Greifer gegen die Außenseite des Warenpakets zugestellt oder weggestellt. Statt der Schwenkbewegung erfolgt hier also eine lineare Zu- und Wegstellbewegung.

Die Nachteile dieser Greiferanordnung sind jedoch die gleichen wie anhand der DE 695 13 984 T2 erwähnt wurden.

Der Erfindung liegt deshalb die Aufgabe zugrunde, einen Palettiergreifer der eingangs genannten Art so weiterzubilden, dass bei wesentlich geringerem Raumbedarf und leichterem Gewicht eine umfassende betriebssichere Klemmung von beliebigen, lose zusammenhängenden Waren gegeben ist.

Zur Lösung der gestellten Aufgabe ist die Erfindung durch die technische Lehre des Anspruchs 1 gekennzeichnet.

Wesentliches Merkmal der Erfindung ist, dass an einer Greiferbasis, welche bevorzugt als Platte ausgebildet ist, ein Pendelrahmen angeordnet ist, der im wesentlichen aus über Schwenklagern an der Greiferbasis ansetzenden Pendelarmen besteht, an deren unteren, freien Enden wiederum schwenkbar ein Greifrahmen angeordnet ist und dass der Greifrahmen die zu ergreifende und klemmende Warenzusammenstellung an allen Seiten umfasst und umgreift.

Mit der gegebenen technischen Lehre ergibt sich der wesentliche Vorteil, dass gemäss der Erfindung auf zwei gegenüberliegend angeordnete Schwenkgreifer als Klemmung verzichtet wird und dass stattdessen ein Greifrahmen verwendet wird, der die in einer Warenzusammenstellung zu greifenden Produkte an allen Seiten umfasst und einschließt und dort klemmend hält.

In einer bevorzugten Ausgestaltung wird in der vorliegenden Erfindung nachstehend das Ergreifen einer rechteckigen Paketanordnung oder Warenzusammenstellung beschrieben. Dies setzt voraus, dass der erfindungsgemäße Greifrahmen ebenfalls einen Rechteck- oder Quadrat-Querschnitt aufweist, worauf die Erfindung jedoch nicht beschränkt ist.

In den anderen Ausführungsbeispielen wird nämlich nachfolgend auch beschrieben, dass statt eines rechteckigen oder quadratischen Greifrahmens dreieckige oder runde Greifrahmen vorgesehen sind, so dass es auf die genaue Form des Greifrahmens nicht darauf ankommt. Wesentlich ist nur, dass der Greifrahmen das zu ergreifende Produkt (Warenpaket) an allen Seiten umgreift und umfasst und deshalb eine umfassende Klemmung des Warenpaketes von allen Seiten her ermöglicht.

Wenn es sich demzufolge nicht um viereckige Kartons, Kisten, Dosen oder Container handelt, können demzufolge auch dreieckige oder anders gestaltete Querschnitte von beliebigen Waren mit einem Greifrahmen nach der vorliegenden Erfindung geklemmt und transportiert werden.

Es handelt sich demzufolge um einen Palettiergreifer, bei dem an der Unterseite über Pendelarme ein Greifrahmen angesetzt ist, der aus einzelnen, miteinander zusammenhängenden, Klemmleisten besteht, welche Klemmleisten in ihrer Länge veränderbar sind.

In einer ersten, einfachsten Ausführungsform der Erfindung ist es deshalb vorgesehen, dass lediglich die an der Längsseite angeordneten Klemmleisten längenveränderbar ausgebildet sind. Es handelt sich demzufolge dann um einen längenveränderbaren Greifrahmen.

In einer zweiten Ausführungsform kann es vorgesehen sein, dass die in der Längsachse verlegten Klemmleisten starr und längenunveränderbar ausgebildet sind, während hingegen die in der Breite angeordneten Klemmleisten in ihrer Länge veränderbar sind. Es handelt sich dann in diesem Ausführungsbeispiel um einen in der Breite veränderbaren Greifrahmen.

Als bevorzugtes Ausführungsbeispiel werden jedoch sowohl längenveränderbare als auch breitenveränderbare Klemmleisten bevorzugt, weil hierdurch eine optimale Anpassung an den Außenumfang des zu ergreifenden Warenpaketes gegeben ist. Demzufolge kann entsprechend der Längen- und Breitenveränderung auch ein von dem Quadrat-Querschnitt oder dem Rechteck-Querschnitt abweichender Querschnitt (z. B. Parallelogramm-Umriss eines Warengebindes) geklemmt werden, weil durch entsprechende individuelle Längenverstellung der in der Längsachse und der Breitachse angeordneten Klemmleisten auch eine unregelmäßige Form des Greifrahmens erzeugt werden kann.

Laut der Erfindung ist es vorgesehen, dass eine Klemmleiste in ihrer jeweiligen Längsachse durch ein Verstellorgan verlängert ist, welches Verstellorgan in seiner Längenausdehnung einstellbar ausgebildet ist.

Ein solches Verstellorgan wird bekannter Weise auch als "Muskel" bezeichnet. Bei einem solchen Muskel handelt es sich um ein schlauchförmiges Gebilde, welches einen Schlauch aufweist, an dessen beiden Stirnseiten abgedichtet entsprechende Endstücke angeordnet sind.

Der Schlauch ist luftschlüssig mit den beiden Endstücken verbunden und diese dichten gleichzeitig den Schlauchinnenquerschnitt ab.

Wird nun ein entsprechender Überdruck auf den Innenraum des Schlauchquerschnittes gegeben, dann bläht sich dieser auf, und diese Aufblähung führt zu einer Längenverkürzung zwischen den Endstücken. Die Endstücke rücken somit näher zusammen. Ein solcher Muskel ist ein günstiges Verstellorgan, welches besonders kostengünstig herstellbar ist und welches besonders einfach in Verlängerung der Klemmleisten angeordnet werden kann, um eine Längenveränderung dieser Klemmleisten zu ermöglichen.

Hierbei ist es gleichgültig, ob die Längenverstellorgane in Eckstücken des Greifrahmens angeordnet sind oder ob diese Längenverstellorgane in den Klemmleisten angeordnet sind. Beides wird von der Erfindung als wesentlich beansprucht.

In der vorstehenden Beschreibung wurde ein Greifrahmen erläutert, der Teil eines Pendelrahmens ist, der an der Unterseite der Greiferbasis gelenkig schwenkbar angeordnet ist.

Für manche Greifaufgaben reicht es jedoch nicht aus, nur die den Außenumriss des Warenpaketes bildenden Gegenstände mit dem genannten Greifrahmen zu klemmen. Zu diesem Zweck sieht die Erfindung eine Kombination zwischen dem erfindungsgemäßen Greifrahmen und einer in der Mitte der Greiferbasis angeordneten Saugplatte vor.

In einer bevorzugten Ausgestaltung ist die Saugplatte über ein Scherenhubgestell mit der Unterseite der Greiferbasis verbunden und an die gegen die Warenoberseite gerichtete Unterseite der Saugplatte kann über eine Vielzahl von Saugkanälen ein Vakuum angelegt werden.

Bei manchen Ausführungsformen reicht auch ein solcher Palettiergreifer mit einer daran angeordneten Saugplatte nicht aus und es ist notwendig, die Greiferbasis mit einer zusätzlichen Saugglocke zu versehen.

Eine solche Saugglocke besteht im wesentlichen aus elastischen Kunststoffplatten oder Wänden, die abdichtend mit den Seitenkanten der Greiferbasis verbunden sind und die wiederum abgedichtet auch mit den Außenflächen des Greifrahmens verbunden sind. Diese umlaufenden Dichtmatten bilden somit eine vollkommen insich geschlossene (lediglich nach unten geöffnete) Saugglocke aus, so dass es bei manchen Palettier- oder Depalettieraufgaben darauf ankommt, drei der genannten Elemente in Kombination zu verwenden. Es wird demzufolge auch der Greifrahmen mit der Saugplatte und der genannten Saugglocke in Kombination verwendet, um besonders diffizile Greifaufgaben auszuführen.

Aus allen drei Kombinationsmerkmalen ergibt sich ferner, dass mit der erfindungsgemäßen Anordnung eine Vielzahl diffiziler Palettier- und Depalettieraufgaben erfüllt werden kann, wie sie bisher in diesem Umfang noch nicht lösbar waren.

Insbesondere die umlaufende Ergreifung des Warenpaketes an allen vier Seiten (ein Rechteck- oder Quadrat-Querschnitt des Warenpaketes vorausgesetzt) führt zu einer zuverlässigen Ergreifung des Warenpaketes.

Verwendet man noch zusätzlich eine Saugplatte, können auch die innen liegenden Pakete von der oberen Stirnseite her noch zusätzlich durch Saugkraft unterstützt ergriffen und entsprechend umgesetzt werden.

Verwendet man noch zusätzlich eine umlaufende Saugglocke, erzeugt man so zwischen der Außenseite des Warenpaketes und der Innenseite des Greifrahmens einen Saugluftstrom (Nebenstrom), so dass aufgrund dieser Saugwirkung noch eine zusätzliche Klemmung und Fixierung des Warenpaketes gegeben ist.

Es wird noch erwähnt, dass die den Greifrahmen bildenden Klemmleisten an ihren dem Warenpaket zugewandten Seiten noch aufblasbare Klemmschläuche aufweisen können, bei deren Aufblasen noch eine individuelle Anpassung der Klemmleiste an die ggf. unregelmäßige Oberfläche des Warenpaketes gegeben ist.

Auch durch diese aufblasbaren Klemmschläuche wird noch eine weitere günstige Anpassung an den Außenumfang eines möglicherweise unregelmäßigen Warenpaketes erreicht.

Im Folgenden wird die Erfindung anhand von mehrere Ausführungswege darstellenden Zeichnungen erläutert. Hierbei gehen aus den Zeichnungen und ihrer Beschreibung weitere erfindungswesentliche Merkmale und Vorteile der Erfindung hervor.

Es zeigen:
- Figur 1 :: eine perspektivische Ansicht eines Palettiergreifers mit einem Pendelrahmen
- Figur 2 :: eine perspektivische Ansicht einer Greiferbasis mit Dichtmatten und Sauganschluss
- Figur 3 :: eine Perspektivische Ansicht eines Palettiergreifers mit Saugplatte und Pendelrahmen
- Figur 4 :: eine perspektivische Ansicht eines Palettiergreifers mit erweitereten Pendelrahmen
- Figur 5 :: eine Hauptansicht eines Palettiergreifers mit Saugplatte und Pendelrahmen
- Figur 6 :: schematische Darstellung des Hubspiels eines Schlauchelementes zwischen zwei Endstücken
- Figur 7 :: eine schematische Darstellung eines bogenförmigen Greifrahmens
- Figur 8 :: eine schematische Darstellung eines sechseckförmigen Greifrahmens
- Figur 9 :: eine schematische Darstellung eines dreieckförmigen Greifrahmens

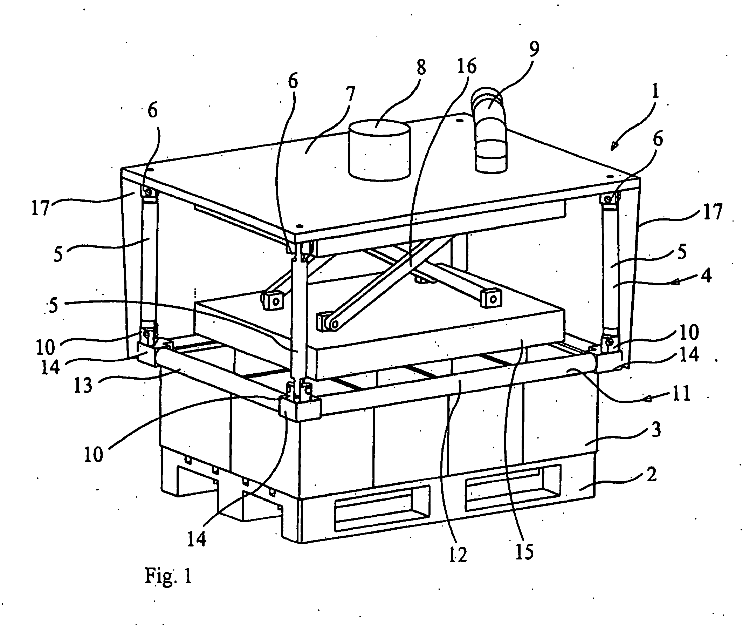

In den Figuren 1 bis 5 ist als Ausführungsbeispiel ein Palettiergreifer 1 dargestellt, der eine rechteckförmige Grundfläche ausbildet. An einer Greiferbasis 7, die als starre Platte ausgebildet ist, ist ein Adapterstück 8 angeordnet, welches mit einer Handhabungsvorrichtung, wie zum Beispiel einem Mehrachsroboter oder dergleichen verbindbar ist.

Ferner wird die Greiferbasis 7 von einer Saugleitung 9 durchgriffen, die in den Innenraum unterhalb der Greiferbasis 7 einmündet.

An der Unterseite der Greiferbasis 7 sind hierbei Schwenklager 6 angeordnet, an denen schwenkbar Pendelarme 5 angeordnet sind.

Die Pendelarme 5 bilden zusammen mit einem unteren Greifrahmen 11 einen Pendelrahmen 4, der im gezeigten Ausführungsbeispiel etwa rechteckförmigen Querschnitt aufweist, um demzufolge rechteckförmig auf einer Palette 2 angeordnete Gegenstände 3 zu erfassen, zu klemmen und von der Palette 2 abzuheben und auf eine andere Aufstellfläche zu verbringen.

An der unteren Seite der Pendelarme 5 sind gleichfalls flexible, in allen Richtungen bewegliche Schwenklager 10 angeordnet, die in zugeordneten Eckstücken 14 münden, in denen - nach einer erwähnten Ausführung - die Längenverstellantriebe für die Längenverstellung der Klemmleisten 12, 13 angeordnet sein kann. Die flexiblen Schwenklager 10 können sowohl an der unteren Seite, als auch an der oberen Seite, oder an beiden Seiten der Pendelarme 5 befestigt sein. Zur Arretierung des Pendelrahmens 4 können bei Bedarf Klemmungen, Fixierungen oder Ähnliches verwendet werden. Diese sind auf den folgenden Figuren nicht speziell angedeutet.

In Figur 1 ist der Übersichtlichkeit halber noch nicht dargestellt, an welcher Stelle die Längenverstellorgane angeordnet sind.

Zwischen den Eckstücken 14 sind deshalb die Klemmleisten 12, 13 angeordnet, wobei erfindungsgemäß die Klemmleisten 12 und/oder die Klemmleisten 13 in ihrer Länge jeweils einstellbar und feststellbar ausgebildet sind.

Zur weiteren Verbesserung der Transportleistung des genannten Palettiergreifers ist im Innenraum unterhalb der Greiferbasis 7 eine Saugplatte 15 angeordnet, die über ein Scherengestell 16 höheneinstellbar unterhalb der Greiferbasis 7 angeordnet ist und die mit ihrer Oberseite auf die Oberseite der Gegenstände 3 aufsetzbar ist.

Durch Anlegen eines Vakuums an die Unterseite der Saugplatte 15 werden deshalb zusätzlich die zu ergreifenden Gegenstände 3 ergriffen, und es erfolgt eine verbesserte Klemmung und Führung dieser Gegenstände.

Die Saugplatte 15 wird bedarfsweise eingesetzt. Derartige bevorzugte Einsatzgebiete sind vor allem sehr schwere Gegenstände 3, die eine zusätzliche Fixierung im Mittenbereich der Greiferbasis 7 erfordern oder auch sehr leichte, verformbare Gegenstände 3, die bei einem zu starken Zusammenklemmen des Greifrahmens 11 sich möglicherweise verformen.

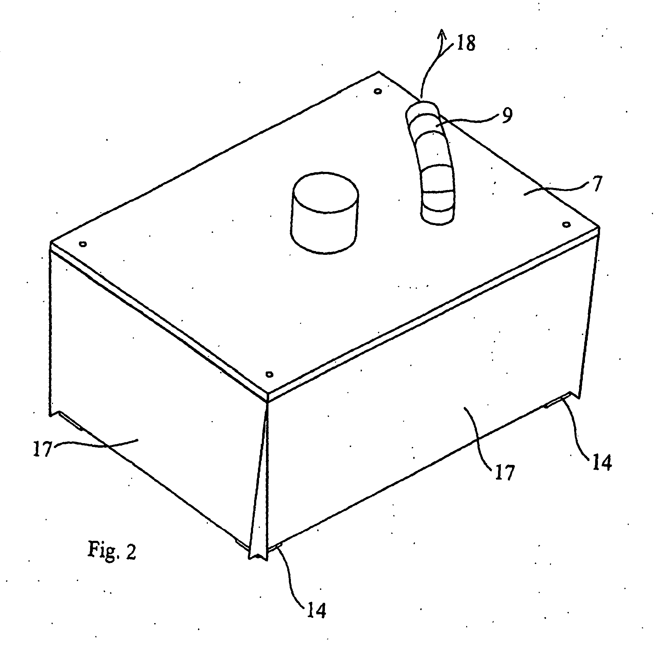

Weiterhin zeigt der Palettiergreifer mindestens teilweise die Elemente einer Saugglocke, weil hier der Übersichtlichkeit halber lediglich eine hintere Dichtmatte in der Längsrichtung und eine in der Breitrichtung angeordnete Dichtmatte 17 dargestellt ist. In der einsatzfertigen Formgebung sind sich umschließende Dichtmatten 17 vollständig die Greiferbasis, wie dies in Figur 2 dargestellt ist. Sie sind mit ihren unteren Enden bevorzugt an den Eckstücken 14 abdichtend verbunden und sind ebenso abdichtend an den Klemmleisten 12,13 angelegt.

Durch entsprechendes Anlegen eines Vakuums, welches beispielsweise in Pfeilrichtung 18 aus der Saugleitung 9 als Luftstrom aus dem Innenraum entnommen wird, erfolgt hiermit eine zusätzliche saugende Unterstützung, weil der gesamte Innenraum unterhalb der Greiferbasis 7 unter Unterdruckwirkung besteht und hierdurch eine besonders verbesserte Haltewirkung auf die zu ergreifenden Gegenstände 3 gegeben ist.

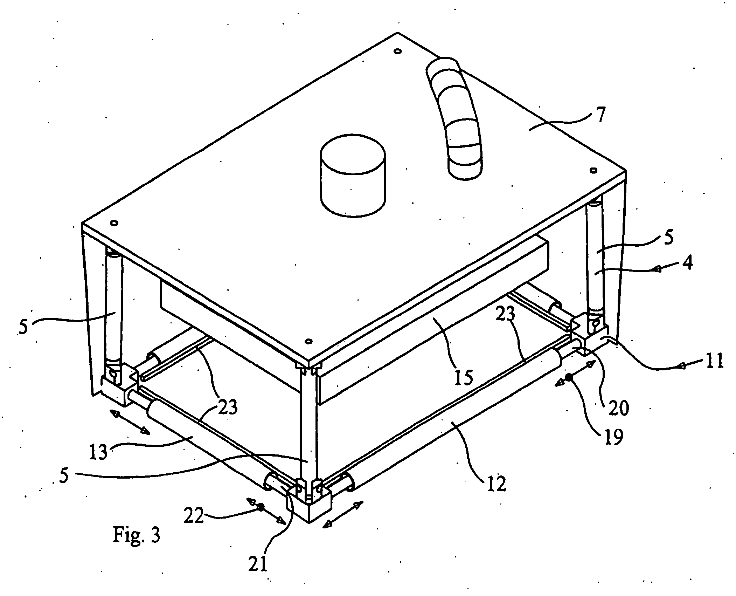

In Figur 3 ist dargestellt, dass Längenverstellantriebe 20 und Breitenverstellantriebe 21 jeweils in den Eckstücken 14 angeordnet sind, so dass in diesem Bereich in den Pfeilrichtungen 19, 22 die Längen- und Breiteneinstellbarkeit der Klemmleisten 12, 13 gegeben ist.

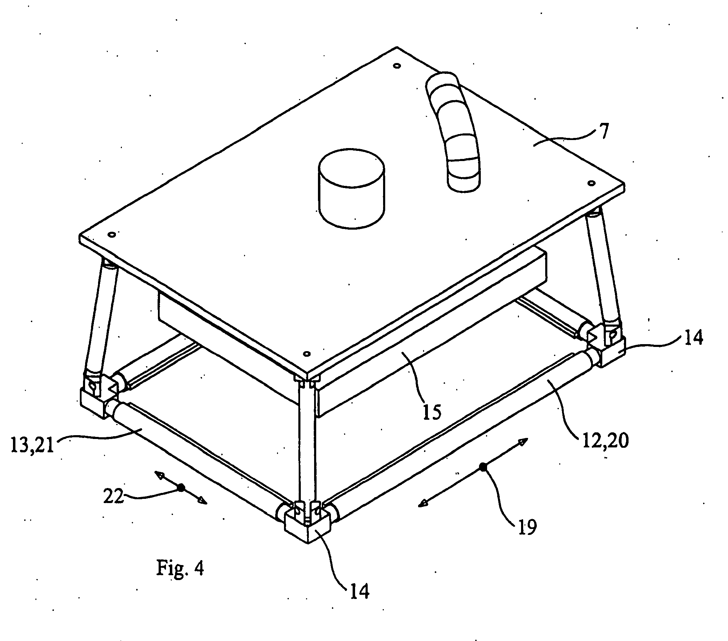

In Figur 4 ist hingegen dargestellt, dass der Längen- und Breitenverstellantrieb 20, 21 unmittelbar in den Klemmleisten 12,13 selbst eingebaut ist und hierdurch die Klemmleisten selbst in ihrer Länge einstellbar und feststellbar ausgebildet sind. Es erfolgt demzufolge eine Einstellung in den Pfeilrichtungen 19, 22.

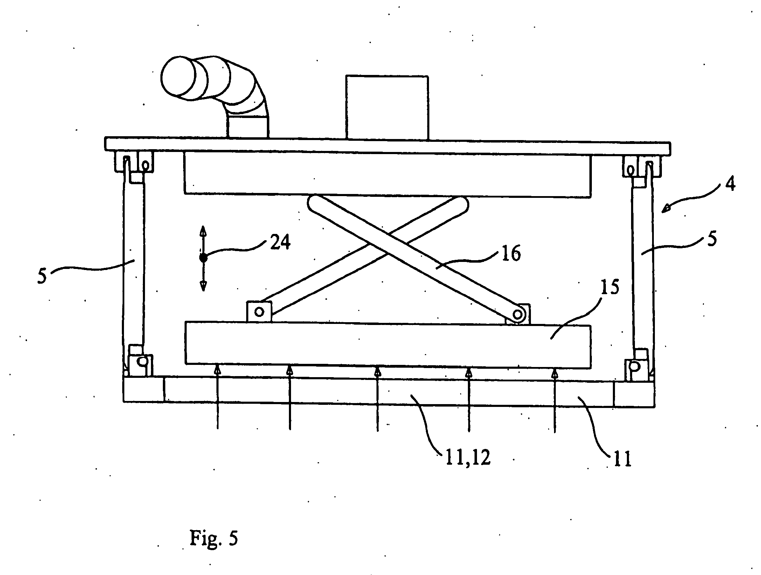

Die Figur 5 zeigt, dass zur verbesserten Halterung der zu klemmenden Gegenstände 3 zunächst die Saugplatte 15 auf die Oberseite der Gegenstände 3 aufgefahren wird und hierdurch eine Verstellbewegung in Pfeilrichtung 24 unterhalb der Greiferbasis 7 stattfindet. Sobald die Saugplatte 15 auf der Oberseite der Gegenstände 3 aufgefahren ist, legen sich automatisch die Klemmleisten 12,13 des Greifrahmens 11 an den Seitenflächen der zu ergreifenden Gegenstände 3 an, weil es sich um eine automatische Einstellung handelt, wenn nämlich die Saugplatte 15 auf Kontakt mit der Oberfläche der zu ergreifenden Gegenstände 3 gefahren ist, erstrecken sich automatisch die Klemmleisten des Greifrahmens 11 über die Oberseiten der Gegenstände 3 hinaus nach unten, so dass der Greifrahmen 11 sich stets an den Seitenflächen der zu haltenden Gegenstände 3 automatisch anlegt. Es bedarf deshalb keiner Längeneinstellung der Pendelarme 5, diese können stets in einer vorgegebenen Länge fixiert sein.

Selbstverständlich ist die Erfindung nicht darauf beschränkt, dass die Länge der Pendelarme 5 nicht einstellbar ist. In einer anderen Ausgestaltung der Erfindung kann es deshalb vorgesehen sein, dass auch die Länge der Pendelarme 5 einstellbar ausgebildet ist. Es können deshalb ähnliche Verstellorgane verwendet werden, wie sie vorstehend und auch nachstehend noch für die Längenveränderung der Klemmleisten 12, 13 des Greifrahmens 11 verwendet werden.

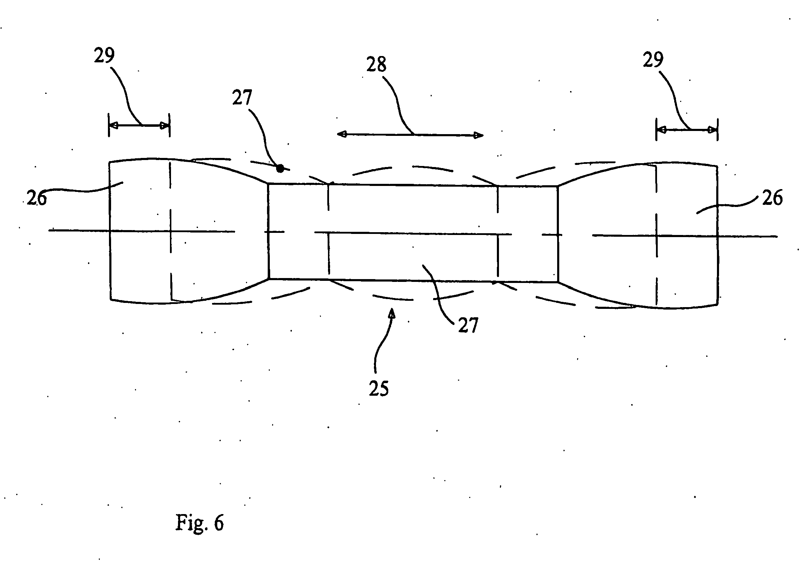

Die Figur 6 zeigt einen sogenannten "Muskel" als Verstellorgan 25, mit dem die genannte Längeneinstellung der Längenverstellantriebe 20, 21 und ggf. auch der Länge der Pendelarme 5 vorgenommen werden kann.

Zwischen zwei festen Endstücken 26 ist hierbei ein aufblähbares Schlauchelement 27 angeordnet, wobei mittels der Einleitung eines Überdrucks in eines der beiden Endstücke 26 von z. B. 6 oder mehr bar sich das Schlauchelement 27 in Richtung der gestrichelten Linien aufbläht und hierbei eine Längenveränderung in den Pfeilrichtungen 28 stattfindet. Es ergibt sich somit eine Verkürzung des Abstandes zwischen den Endstücken 26 um jeweils das Hubspiel 29.

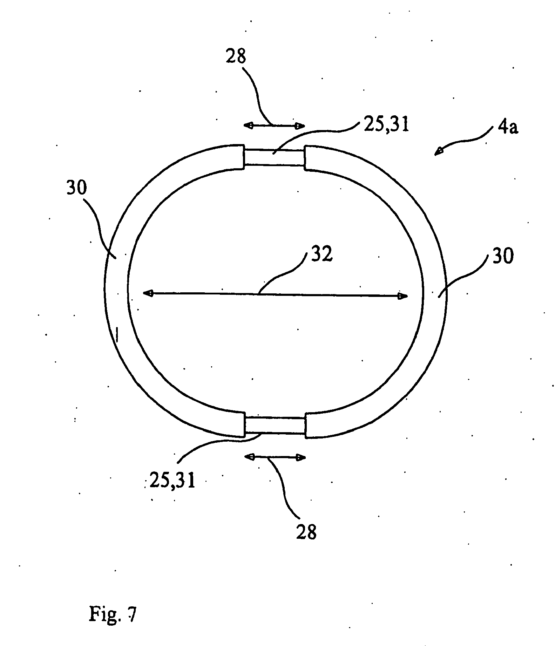

Die Figur 7 zeigt, dass der Palettiergreifer 1 nicht auf einen rechteckigen oder quadratischen Querschnitt eines Greifarmes 11 beschränkt ist. Dort ist dargestellt, dass auch ein runder Greifrahmen verwendet werden kann. In diesem Fall besteht der runde Greifrahmen aus starren Bogenelementen 30, zwischen denen wiederum Verstellorgane 25, 31 angeordnet sind.

Es erfolgt jedenfalls eine Veränderung des Durchmessers 32, so dass mit einem solchen Pendelrahmen 4a auch runde Paketgegenstände ergriffen werden können.

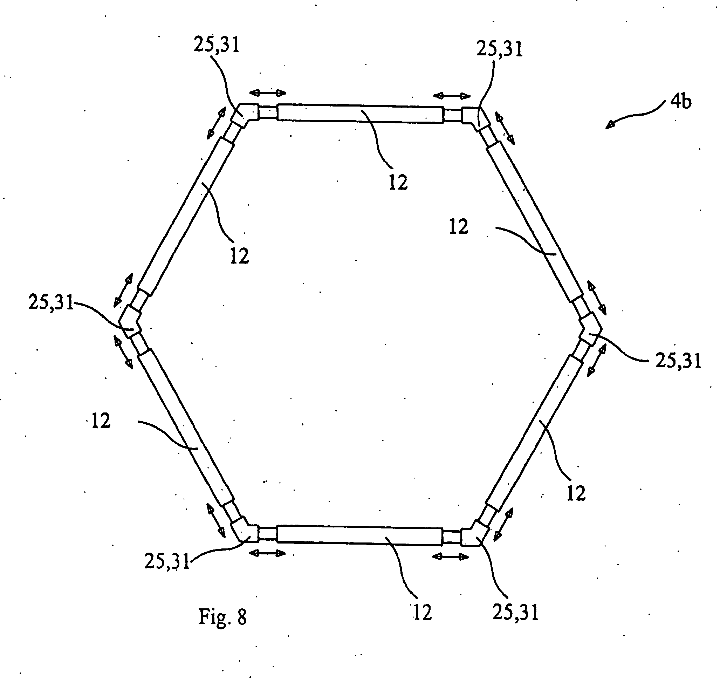

Die Figur 8 zeigt einen Pendelrahmen 4b, bei dem die Klemmleisten 12 an ihren Verbindungsecken wiederum die genannten Verstellorgane 25, 31 aufweisen und demzufolge der gesamte Querschnitt des Pendelrahmens 4b einstellbar und feststellbar ist.

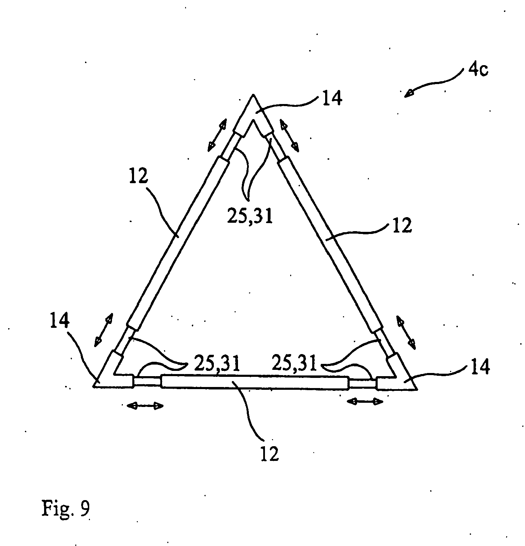

Die Figur 9 zeigt einen ähnlichen Pendelrahmen 4c, der einen dreieckigen Querschnitt aufweist, für den die gleichen Erläuterungen gelten wie sie für die vorstehenden Pendelrahmen 4, 4a, 4b gegeben wurden.

Wichtig ist bei allen Ausführungsbeispielen, dass an den inneren Flächen der jeweiligen Klemmleisten 12, 13 noch zugeordnete Klemmschläuche 23 angeordnet sein können, so wie es beispielsweise in Figur 3 dargestellt ist. Diese Klemmschläuche 23 erstrecken sich bevorzugt über die gesamte Länge der jeweiligen Klemmleisten 12, 13 und sind mittels Luftdruck oder mittels einer Flüssigkeit aufblasbar.

Die Klemmleisten 12, 13 liegen deshalb nicht notwendigerweise unmittelbar an den zu ergreifenden Gegenständen an, sondern es wird ein dazwischen liegender aufblasbarer Klemmschlauch 23 angeordnet.

Mit der Erfindung ergibt sich der wesentliche Vorteil, dass lediglich linear einstellbare Längenverstellantriebe 20, 21 für einen Greifrahmen 11 beschrieben werden, wodurch auf aufwendige Schwenkmechanismen mit Schwenkgreifern verzichtet werden kann. Diese Längenverstellantriebe 20, 21 sind besonders gut geschützt entweder in den Eckstücken oder in den Klemmleisten angeordnet, wodurch eine Beschädigungsgefahr nicht besteht. Ebenso sind diese Längenverstellantriebe 20, 21 sehr leicht im Gewicht, so dass insgesamt das Gewicht eines derartigen Palettiergreifers um 40 bis 50% unter dem eines üblichen Palettiergreifers mit Schwenkgreifern liegt.

Aufgrund der individuellen Einstellbarkeit der Längen- und Breitenverstellantriebe 20, 21 ist es deshalb auch möglich, unregelmäßige Querschnitte von Gegenstandspaketen zu klemmen und schonend zu ergreifen.

### Zeichnungs-Legende

- 1: Palettiergreifer
- 2: Palette
- 3: Gegenstände
- 4: Pendelrahmen 4a,b,c
- 5: Pendelarm
- 6: Schwenklager (oben) flexibel
- 7: Greiferbasis
- 8: Adapterstück
- 9: Saugleitung
- 10: Schwenklager (unten) flexibel
- 11: Greifrahmen
- 12: Klemmleiste (lang)
- 13: Klemmleiste (kurz)
- 14: Eckstück
- 15: Saugplatte
- 16: Scherengestell
- 17: Dichtmatte (Saugglocke)
- 18: Pfeilrichtung
- 19: Pfeilrichtung
- 20: Längenverstellantrieb
- 21: Breitenverstellantrieb
- 22: Pfeilrichtung
- 23: Klemmschlauch
- 24: Pfeilrichtung
- 25: Verstellorgan
- 26: Endstück
- 27: Schlauchelement
- 28: Pfeilrichtung
- 29: Hubspiel
- 30: Bogenelement
- 31: Verstellorgan
- 32: Durchmesser

## Patentansprüche

1. Vorrichtung zum Palettieren und Depalettieren von Warenzusammenstellungen (3) mit einem Palettiergreifer (1), wobei an einer Greiferbasis (7), welche bevorzugt als Platte ausgebildet ist, ein Pendelrahmen (4, 4a, 4b, 4c) angeordnet ist, der im wesentlichen aus über Schwenklager (6, 10) an der Greiferbasis (7) ansetzenden Pendelarmen (5) besteht, an deren unteren, freien Enden wiederum schwenkbar ein Greifrahmen (11) angeordnet ist welcher die zu ergreifende und klemmende Warenzusammenstellung an allen Seiten umfasst und umgreift, und der Greifrahmen (11) einzelne, miteinander zusammenhängende Klemmleisten (12, 13; 30) aufweist, welche in ihrer axialen Richtung mittels Längen- und/oder Breitenverstellantriebe (20, 21, 25, 31) längenveränderbar ausgebildet sind, welche in Verbindungsecken (14) zwischen den Klemmleisten (12, 13; 30) oder aber direkt in den Klemmleisten (12, 13; 30) angeordnet sind, **dadurch gekennzeichnet, dass** der Längen- und/oder Breitenverstellantrieb (20, 21, 25, 31) aus einem Schlauchelement (27), mit an den Stirnseiten luftschlüssig abdichtenden Endstücken (26) gebildet ist und ein Hubspiel (29) mittels Druckbeaufschlagung des Schlauchelementes (27) in Längserstreckung (28) des Schlauchelements (27) ausbildet.

2. Vorrichtung nach Anspruch 1, **dadurch gekennzeichnet, dass** der Palettiergreifer (1) zur Erzeugung eines Vakuums eine Saugplatte (15) und/oder eine Saugglocke beinhaltet.

3. Vorrichtung nach einem der vorhergehenden Ansprüche 1 bis 2, **dadurch gekennzeichnet, dass** der Greifrahmen (11) eine Rechteck-, Quadrat-, Dreieck-, oder Rundform aufweist.

4. Vorrichtung nach mindestens Anspruch 2, **dadurch gekennzeichnet, dass** die Saugplatte (15) unterhalb der Greiferbasis (7) angeordnet ist, die mittels einem Scherengestell (16) auf die Oberfläche der zu transportierenden Warenzusammenstellung (3) auflegbar ist, und mittels eine Vielzahl von angeordneten Saugkanälen ein Vakuum anlegen kann.

5. Vorrichtung nach mindestens Anspruch 2, **dadurch gekennzeichnet, dass** die Saugglocke aus elastischen Kunststoffmatten (17) oder Wänden gebildet ist, welche abdichtend mit Seitenkanten der Greiferbasis (7) und abdichtend mit Außenflächen des Greifrahmens (11) verbunden sind.

6. Vorrichtung nach einem der vorhergehenden Ansprüche 1 bis 5, **dadurch gekennzeichnet, dass** die Klemmleisten (12, 13; 30) an ihren der Warenzusammenstellung zugewandten Seite aufblasbare Klemmschläuche (23) aufweisen, welche eine individuelle Anpassung der Klemmleiste (12, 13; 30) an unregelmäßige Oberflächen der Warenzusammenstellung (3) ausbilden.

7. Vorrichtung nach einem der vorhergehenden Ansprüche 1 bis 6, **dadurch gekennzeichnet, dass** die Greiferbasis (7) mittels einem angeordneten Adapterstück (8) mit einer Handhabungsvorrichtung, wie zum Beispiel einem Mehrachsroboter verbindbar ist.

8. Vorrichtung nach mindestens Anspruch 2, **dadurch gekennzeichnet, dass** die Greiferbasis (7) von einer Saugleitung (9) durchgriffen ist, welche in den Innenraum unterhalb der Greiferbasis (7) einmündet und in der sich ausbildenden Saugglocke einen Saugdruck erzeugen kann.

9. Vorrichtung nach einem der vorhergehenden Ansprüche 1 bis 8, **dadurch gekennzeichnet, dass** die Pendelarme (5) längeneinstellbar ausgebildet sind.

10. Vorrichtung nach einem der vorhergehenden Ansprüche 1 bis 9, **dadurch gekennzeichnet, dass** die Klemmleisten (30) des Greifrahmens (11) als starre Bogenelemente (30) in Rundform ausgebildet sind, wobei die Bogenelemente (30) jeweils mittels einem direkt in den Klemmleisten angeordneten Breitenverstellantrieb (25, 31) verbunden sind, die eine Veränderung des Durchmessers (32) der Rundform erzeugen können.

11. Vorrichtung nach mindestens Anspruch 6, **dadurch gekennzeichnet, dass** die an den Klemmleisten (12, 13) angeordneten Klemmschläuche (23) mittels Luftdruck oder einer Flüssigkeit aufblasbar sind.

## Claims

1. Apparatus for palletizing and depalletizing clutches of goods (3) with a palletizing gripper (1), wherein a hanging frame (4, 4a, 4b, 4c) is arranged on a gripper base (7) that is preferably configured as a plate; the said hanging frame essentially consists of suspension arms (5) attached to the gripper base (7) by pivot bearings (6, 10) and having a gripper frame (11) arranged, also pivotably, at their lower free ends; the said gripper frame (11) surrounds the clutch of goods to be grasped and clamped, and clasps the said clutch on all sides, and has individual clamping bars (12, 13; 30) which are linked together and are configured to be variable in length in their axial direction by means of length and/or width adjusting actuators (20, 21, 25, 31) arranged in corner connections (14) between the clamping bars (12, 13; 30) or directly in the clamping bars (12, 13; 30) themselves; **characterized in that** the length and/or width adjusting actuator (20, 21, 25, 31) is formed by a tubular element (27) stopped airtightly at its ends with end pieces (26), and variation (29) in the longitudinal span (28) of the tubular element (27) is effected by pressurizing the tubular element (27).

2. Apparatus according to Claim 1, **characterized in that** the palletizing gripper (1) has a suction plate (15) and/or suction dome to generate a vacuum.

3. Apparatus according to either of the preceding Claims 1 and 2, **characterized in that** the gripper frame (11) has a rectangular, square, triangular or circular shape.

4. Apparatus according to at least Claim 2, **characterized in that** the suction plate (15) is arranged underneath the gripper base (7) and can be laid by means of a scissor lift (16) on the surface of the clutch of goods (3) to be transferred, and a vacuum can be applied by means of a plurality of fitted suction ducts.

5. Apparatus according to at least Claim 2, **characterized in that** the suction dome is formed from flexible plastic mats (17) or walls airtightly connected to lateral edges of the gripper base (7) and to outer faces of the gripper frame (11).

6. Apparatus according to any one of the preceding Claims 1 to 5, **characterized in that** the clamping bars (12, 13; 30) have inflatable clamping bladders (23) on their side facing the clutch of goods, thus allowing the clamping bars (12, 13; 30) to adapt individually to irregular surfaces of the clutch of goods (3).

7. Apparatus according to any one of the preceding Claims 1 to 6, **characterized in that** the gripper base (7) is connectable by means of a fitted adapter piece (8) to manipulating apparatus, e.g. to a multiaxis robot.

8. Apparatus according to at least Claim 2, **characterized in that** the gripper base (7) is traversed by a suction line (9) which communicates with the inner space underneath the gripper base (7) and can generate a partial vacuum in the suction dome formed.

9. Apparatus according to any one of the preceding Claims 1 to 8, **characterized in that** the suspension arms (5) are adjustable in length.

10. Apparatus according to any one of the preceding Claims 1 to 9, **characterized in that** the clamping bars (30) of the gripper frame (11) are configured as rigid bends (30) forming a circle, the said bends (30) being connected by width adjusting actuators (25, 31) that are arranged directly in the clamping bars and are capable of effecting a change in the diameter (32) of the circle.

11. Apparatus according to at least Claim 6, **characterized in that** the clamping bladders (23) arranged on the clamping bars (12, 13) are inflatable with compressed air or fluid.

## Revendications

1. Dispositif pour palettiser et dépalettiser des ensembles de produits (3) avec un élément de préhension pour palettisation (1), étant précisé qu'il est prévu sur une base d'élément de préhension (7), qui est conçue de préférence comme une plaque, un cadre oscillant (4, 4a, 4b, 4c) composé essentiellement de bras oscillants (5) qui sont montés par l'intermédiaire de paliers de pivotement (6, 10) sur la base d'élément de préhension (7) et aux extrémités libres inférieures desquels est disposé, également pivotant, un cadre de préhension (11) qui entoure et enserre de tous les côtés l'ensemble de produits à saisir et à serrer, et le cadre de préhension (11) comporte des barres de serrage individuelles réunies (12, 13 ; 30) qui sont conçues pour être réglables en longueur dans le sens axial grâce à des entraînements de réglage en longueur et/ou en largeur (20, 21, 25, 31) disposés dans des angles de liaison (14) entre les barres de serrage (12, 13 ; 30), ou directement dans lesdites barres de serrage (12, 13 ; 30), **caractérisé en ce que** l'entraînement de réglage en longueur et/ou en largeur (20, 21, 25, 31) se compose d'un élément tubulaire (27) avec des parties d'extrémité (26) étanches à l'air sur leurs côtés frontaux, et forme un jeu (29) dans le sens longitudinal (28) de l'élément tubulaire (27) grâce à la mise en pression de celui-ci.

2. Dispositif selon la revendication 1, **caractérisé en ce que** l'élément de préhension pour palettisation (1) contient, pour produire un vide, une plaque d'aspiration (15) et/ou une ventouse.

3. Dispositif selon l'une des revendications 1 à 2 précédentes, **caractérisé en ce que** le cadre de préhension (11) présente une forme rectangulaire, carrée, triangulaire ou ronde.

4. Dispositif selon au moins la revendication 2, **caractérisé en ce que** la plaque d'aspiration (15) est disposée au-dessous de la base d'élément de préhension (7) qui est apte à être posée à l'aide d'un châssis à parallélogramme articulé (16) sur la surface de l'ensemble de produits à transporter (3), et peut appliquer un vide à l'aide de plusieurs conduits d'aspiration.

5. Dispositif selon au moins la revendication 2, **caractérisé en ce que** la ventouse se compose de mats élastiques en matière plastique (17) ou de parois qui sont reliées de manière étanche aux bords latéraux de la base d'élément de préhension (7) et de manière étanche aux surfaces extérieures du bâti de préhension (11).

6. Dispositif selon l'une des revendications 1 à 5 précédentes, **caractérisé en ce que** les barres de serrage (12, 13 ; 30) présentent, sur leur côté tourné vers l'ensemble de produits, des tuyaux de serrage gonflables (23) qui forment une adaptation individuelle de la barre de serrage (12, 13 ; 30) à des surfaces irrégulières de l'ensemble de produits (3).

7. Dispositif selon l'une des revendications 1 à 6 précédentes, **caractérisé en ce que** la base d'élément de préhension (7) est apte à être reliée à l'aide d'un adaptateur (8) à un dispositif de manipulation comme par exemple un robot multiaxe.

8. Dispositif selon au moins la revendication 2, **caractérisé en ce que** la base d'élément de préhension (7) est traversée par une conduite d'aspiration (9) qui débouche dans l'espace intérieur au-dessous de la base d'élément de préhension (7) et qui peut produire une pression d'aspiration dans la ventouse qui se forme.

9. Dispositif selon l'une des revendications 1 à 8 précédentes, **caractérisé en ce que** les bras oscillants (5) sont conçus pour être réglables en longueur.

10. Dispositif selon l'une des revendications 1 à 9 précédentes, **caractérisé en ce que** les barres de serrage (30) du bâti de préhension (11) sont conçues comme des éléments courbes rigides (30) de forme arrondie, les éléments courbes (30) étant reliés chacun à l'aide d'un entraînement de réglage en largeur (25, 31) disposé directement dans les barres de serrage, qui peut produire une modification du diamètre (32) de la forme arrondie.

11. Dispositif selon au moins la revendication 6, **caractérisé en ce que** les tuyaux de serrage (23) disposés sur les barres de serrage (12, 13) sont aptes à être gonflés grâce à une pression d'air ou à un liquide.
